# EUROPEAN PATENT APPLICATION

(11) **EP 4 716 151 A1**
(43) Date of publication of application: **25.03.2026**
(21) Application number: 23941100.2
(22) Date of filing: 16.06.2023
(51) Int. Cl.: H04L 9/28

(54) **SECURE COMMUNICATION METHOD AND APPARATUS**

(71) Applicant: Huawei Technologies Co., Ltd., Shenzhen, Guangdong 518129 (CN)
(72) Inventor: SUN, Li, Shenzhen, Guangdong 518129 (CN); LIU, Peng, Shenzhen, Guangdong 518129 (CN); WANG, Wenhui, Shenzhen, Guangdong 518129 (CN)
(74) Representative: Goddar, Heinz J.
(86) International application number: PCT/CN2023/100805
(87) International publication number: WO 2024/254867

(57) **Abstract**

This application provides a secure communication method and apparatus, and relates to the field of wireless communication technologies, to improve data transmission performance. In the method, a communication apparatus receives an i^{th} codeword, where the i^{th} codeword is obtained by encoding an i^{th} first data packet. The i^{th} first data packet is obtained by encrypting an i^{th} second data packet based on an i^{th} random seed. The communication apparatus sends response information of the i^{th} codeword based on a decoding result of the i^{th} codeword, where the response information indicates that the i^{th} codeword is successfully decoded or fails to be decoded. Based on the foregoing solution, a communication apparatus at a transmitter end may determine, based on the response information, whether a communication apparatus at a receiver end correctly decodes the i^{th} codeword. When transmitting an (i+1)^{th} codeword, the communication apparatus at the transmitter end may adjust a random seed based on whether the receiver end correctly decodes the i^{th} codeword. This avoids further error propagation when the i^{th} codeword fails to be decoded.

## Description

### TECHNICAL FIELD

This application relates to the field of wireless communication technologies, and in particular, to a secure communication method and apparatus.

### BACKGROUND

Secure transmission is the fundamental assurance for communication. Most secure transmission solutions are key-based, and include symmetric encryption and asymmetric encryption. In symmetric encryption, two parties share a key. In asymmetric encryption, one communication party transmits a public key to the other party. A transmitter uses the public key for encryption, and a receiver uses a private key for decryption. Regardless of the encryption scheme, the two communication parties need to maintain and manage the keys. Because key maintenance and management require support of complex protocols, vulnerabilities in these protocols are often exploited by adversaries. In addition, the complex protocols result in extra communication overheads and delays, making them unable to cope with the highly dynamic nature of future communication networks.

Currently, a physical layer security transmission technology, such as secure coding, secure waveform modulation, or introduction of artificial noise into channels, may implement information transmission and provide basic security. However, the security provided by the physical layer security transmission technology is limited, and non-target receivers still have a high probability of obtaining transmitted information.

### SUMMARY

This application provides a secure communication method and apparatus, to prevent a decoding error of a data packet from propagating across different packets, thereby improving data transmission performance.

According to a first aspect, a secure communication method is provided. The method may be performed by a communication apparatus. The communication apparatus may be a terminal device or a network device, or may be a chip/chip system used in the terminal device or the network device. In the method, the communication apparatus receives an i^{th} codeword, where the i^{th} codeword is obtained by encoding an i^{th} first data packet. The i^{th} first data packet is obtained by encrypting an i^{th} second data packet based on an i^{th} random seed. It should be understood that if i is an integer greater than or equal to 2, the i^{th} random seed is generated based on an (i-1)^{th} random seed and an (i-1)^{th} second data packet or the i^{th} random seed is generated based on an (i-1)^{th} random seed and an (i-1)^{th} first data packet; or if i is equal to 1, the i^{th} random seed is generated based on a random vector. The communication apparatus sends response information of the i^{th} codeword based on a decoding result of the i^{th} codeword. The response information indicates that the i^{th} codeword is successfully decoded or fails to be decoded.

Based on the foregoing solution, the codeword is encrypted based on the random seed, so that security performance of the codeword can be improved. In addition, a communication apparatus at a transmitter end may determine, based on the response information, whether a communication apparatus at a receiver end correctly decodes the i^{th} codeword. When transmitting an (i+1)^{th} codeword, the communication apparatus at the transmitter end may adjust a random seed based on whether the receiver end correctly decodes the i^{th} codeword. This avoids further error propagation when the i^{th} codeword fails to be decoded.

In a possible implementation, the communication apparatus determines the i^{th} second data packet and an (i+1)^{th} random seed based on the (i-1)^{th} random seed, the (i-1)^{th} first data packet, and the i^{th} first data packet. Alternatively, the communication apparatus determines the i^{th} second data packet and an (i+1)^{th} random seed based on the (i-1)^{th} random seed, the (i-1)^{th} second data packet, and the i^{th} first data packet. The response information indicates that an (i-1)^{th} codeword is successfully decoded.

Based on the foregoing solution, when correctly decoding the i^{th} codeword, the communication apparatus at the receiver end can decrypt the i^{th} first data packet based on the i^{th} random seed to obtain the i^{th} second data packet and the (i+1)^{th} random seed, so that the i^{th} second data packet and the (i+1)^{th} random seed can be used to decrypt a next codeword.

In a possible implementation, the communication apparatus sets the i^{th} second data packet to a first fixed sequence. The response information indicates that the i^{th} codeword fails to be decoded. The communication apparatus receives an (i+1)^{th} codeword, where the (i+1)^{th} codeword is obtained by encoding an (i+1)^{th} first data packet. The (i+1)^{th} first data packet is obtained by encrypting an (i+1)^{th} second data packet based on the (i+1)^{th} random seed, and the (i+1)^{th} random seed is generated based on the first fixed sequence.

Because the communication apparatus at the transmitter end encrypts the second data packet based on the random seed, if the communication apparatus at the receiver end fails to decode the codeword, the communication apparatus at the receiver end cannot obtain the correct second data packet by decrypting the decoding result, and the error spreads between different data packets. Based on the foregoing solution, when a decoding error occurs, the second data packet is set to the fixed sequence, so that the decoding error can be prevented from spreading on the terminal device. In addition, due to independence of a non-target channel and a legitimate channel, a sequence number of a data packet that is of a non-target receiver and on which the decoding error occurs cannot be completely the same as that of the terminal device. This means that the non-target receiver cannot maintain synchronization of the random seed with the communication apparatus at the transmitter end. Therefore, it can be ensured that the decoding error of the non-target receiver is spread. In this way, communication security can be improved without affecting transmission performance of a legitimate user.

In a possible implementation, the communication apparatus sets the (i+1)^{th} random seed to a second fixed sequence. The response information indicates that the i^{th} codeword fails to be decoded. The communication apparatus receives an (i+1)^{th} codeword, where the (i+1)^{th} codeword is obtained by encoding an (i+1)^{th} first data packet. The (i+1)^{th} first data packet is obtained by encrypting an (i+1)^{th} second data packet based on the (i+1)^{th} random seed.

Because the communication apparatus at the transmitter end encrypts the second data packet based on the random seed, if the communication apparatus at the receiver end fails to decode the codeword, the communication apparatus at the receiver end cannot obtain the correct second data packet by decrypting the decoding result, and the error spreads between different data packets. Based on the foregoing solution, when a decoding error occurs, the random seed is set to the fixed sequence, so that the decoding error can be prevented from spreading on the terminal device. In addition, due to independence of a non-target channel and a legitimate channel, a sequence number of a data packet that is of a non-target receiver and on which the decoding error occurs cannot be completely the same as that of the terminal device. This means that the non-target receiver cannot maintain synchronization of the random seed with the communication apparatus at the transmitter end. Therefore, it can be ensured that the decoding error of the non-target receiver is spread. In this way, communication security can be improved without affecting transmission performance of a legitimate user.

In a possible implementation, before the communication apparatus sets the i^{th} second data packet to the first fixed sequence or sets the (i+1)^{th} random seed to the second fixed sequence, the i^{th} codeword satisfies the following condition: The i^{th} codeword fails to be decoded and a quantity of retransmissions of the i^{th} codeword reaches a preset threshold.

Based on the foregoing solution, when decoding fails, the communication apparatus at the receiver end may request the communication apparatus at the transmitter end to retransmit the i^{th} codeword, so that the communication apparatus at the receiver end can successfully decode the i^{th} codeword. When the quantity of retransmissions reaches the preset threshold, the communication apparatus at the receiver end may set the i^{th} second data packet to the first fixed sequence or set the (i+1)^{th} random seed to the second fixed sequence, to prevent errors from propagating to other data packets.

In a possible implementation, the first fixed sequence is agreed on in advance. Based on this solution, the first fixed sequence is agreed on in advance, so that when the communication apparatus at the receiver end fails to decode the i^{th} codeword, the communication apparatus at the transmitter end and the communication apparatus at the receiver end can also synchronize the (i+1)^{th} random seed. This can prevent an error of an i^{th} data packet from spreading to an (i+1)^{th} data packet or even a plurality of subsequent data packets.

In a possible implementation, the second fixed sequence is agreed on in advance. Based on this solution, the second fixed sequence is agreed on in advance, so that when the communication apparatus at the receiver end fails to decode the i^{th} codeword, the communication apparatus at the transmitter end and the communication apparatus at the receiver end can also synchronize the (i+1)^{th} random seed. This can prevent an error of an i^{th} data packet from spreading to an (i+1)^{th} data packet or even a plurality of subsequent data packets.

In a possible implementation, the communication apparatus receives a 1^{st} codeword, where the 1^{st} codeword is obtained by encoding a 1^{st} random seed. The communication apparatus decodes the 1^{st} codeword to obtain the 1^{st} random seed. Based on this solution, the communication apparatus at the transmitter end and the communication apparatus at the receiver end can synchronize the 1^{st} random seed.

According to a second aspect, a secure communication method is provided. The method may be performed by a communication apparatus. The communication apparatus may be a terminal device or a network device, or may be a chip/chip system used in the terminal device or the network device. In the method, the communication apparatus encrypts an i^{th} second data packet based on an i^{th} random seed to obtain an i^{th} first data packet. If i is an integer greater than or equal to 2, the i^{th} random seed is generated based on an (i-1)^{th} random seed and an (i-1)^{th} first data packet; or if i is equal to 1, the i^{th} random seed is generated based on a random vector. The communication apparatus encodes the i^{th} first data packet to obtain an i^{th} codeword. The communication apparatus sends the i^{th} codeword. The communication apparatus receives response information of the i^{th} codeword. The response information indicates that the i^{th} codeword is successfully decoded or fails to be decoded.

In a possible implementation, the communication apparatus sets the i^{th} second data packet to a first fixed sequence, where the response information indicates that the i^{th} codeword fails to be decoded. The communication apparatus encrypts an (i+1)^{th} second data packet based on an (i+1)^{th} random seed to obtain an (i+1)^{th} first data packet. The (i+1)^{th} random seed is generated based on the first fixed sequence. The communication apparatus encodes the (i+1)^{th} first data packet to obtain an (i+1)^{th} codeword. The communication apparatus sends the (i+1)^{th} codeword.

In a possible implementation, the communication apparatus sets an (i+1)^{th} random seed to a second fixed sequence, where the response information indicates that the i^{th} codeword fails to be decoded. The communication apparatus encrypts an (i+1)^{th} second data packet based on the (i+1)^{th} random seed to obtain an (i+1)^{th} first data packet. The (i+1)^{th} random seed is generated based on the second fixed sequence. The communication apparatus encodes the (i+1)^{th} data packet to obtain an (i+1)^{th} codeword. The communication apparatus sends the (i+1)^{th} codeword.

In a possible implementation, before the communication apparatus sets the i^{th} second data packet to the first fixed sequence or sets the (i+1)^{th} random seed to the second fixed sequence, the i^{th} codeword satisfies the following condition: The i^{th} codeword fails to be decoded and a quantity of retransmissions of the i^{th} codeword reaches a preset threshold.

In a possible implementation, the first fixed sequence is agreed on in advance.

In a possible implementation, the second fixed sequence is agreed on in advance.

In a possible implementation, the communication apparatus encodes a 1^{st} random seed to obtain a 1^{st} codeword. The communication apparatus sends the 1^{st} codeword.

According to a third aspect, a communication apparatus is provided, including a processing unit and a transceiver unit.

The transceiver unit is configured to receive an i^{th} codeword. The i^{th} codeword is obtained by encoding an i^{th} first data packet. The i^{th} first data packet is obtained by encrypting an i^{th} second data packet based on an i^{th} random seed. If i is an integer greater than or equal to 2, the i^{th} random seed is generated based on an (i-1)^{th} random seed and an (i-1)^{th} second data packet or the i^{th} random seed is generated based on an (i-1)^{th} random seed and an (i-1)^{th} first data packet; or if i is equal to 1, the i^{th} random seed is generated based on a random vector. The processing unit is configured to generate response information of the i^{th} codeword based on a decoding result of the i^{th} codeword. The transceiver unit is further configured to send the response information of the i^{th} codeword. The response information indicates that the i^{th} codeword is successfully decoded or fails to be decoded.

In a possible implementation, the processing unit is further configured to determine the i^{th} second data packet and an (i+1)^{th} random seed based on the (i-1)^{th} random seed, the (i-1)^{th} first data packet, and the i^{th} first data packet. Alternatively, the processing unit is further configured to determine the i^{th} second data packet and an (i+1)^{th} random seed based on the (i-1)^{th} random seed, the (i-1)^{th} second data packet, and the i^{th} first data packet. The response information indicates that the i^{th} codeword is successfully decoded.

In a possible implementation, the processing unit is further configured to set the i^{th} second data packet to a first fixed sequence. The response information indicates that the i^{th} codeword fails to be decoded. The transceiver unit is further configured to receive an (i+1)^{th} codeword, where the (i+1)^{th} codeword is obtained by encoding an (i+1)^{th} first data packet. The (i+1)^{th} first data packet is obtained by encrypting an (i+1)^{th} second data packet based on the (i+1)^{th} random seed, and the (i+1)^{th} random seed is generated based on the first fixed sequence.

In a possible implementation, the processing unit is further configured to set the (i+1)^{th} random seed to a second fixed sequence. The response information indicates that the i^{th} codeword fails to be decoded. The transceiver unit is further configured to receive an (i+1)^{th} codeword, where the (i+1)^{th} codeword is obtained by encoding an (i+1)^{th} first data packet. The (i+1)^{th} first data packet is obtained by encrypting an (i+1)^{th} second data packet based on the (i+1)^{th} random seed.

In a possible implementation, before the i^{th} second data packet is set to the first fixed sequence or the (i+1)^{th} random seed is set to the second fixed sequence, the i^{th} codeword satisfies the following condition: The i^{th} codeword fails to be decoded and a quantity of retransmissions of the i^{th} codeword reaches a preset threshold.

In a possible implementation, the first fixed sequence is agreed on in advance.

In a possible implementation, the second fixed sequence is agreed on in advance.

In a possible implementation, the transceiver unit is further configured to receive a 1^{st} codeword, where the 1^{st} codeword is obtained by encoding a 1^{st} random seed. The processing unit is further configured to decode the 1^{st} codeword to obtain the 1^{st} random seed.

According to a fourth aspect, a communication apparatus is provided, including a processing unit and a transceiver unit.

The processing unit is configured to encrypt an i^{th} second data packet based on an i^{th} random seed to obtain an i^{th} first data packet. If i is an integer greater than or equal to 2, the i^{th} random seed is generated based on an (i-1)^{th} random seed and an (i-1)^{th} first data packet; or if i is equal to 1, the i^{th} random seed is generated based on a random vector. The processing unit is further configured to encode the i^{th} first data packet to obtain an i^{th} codeword. The transceiver unit is configured to send the i^{th} codeword. The transceiver unit is further configured to receive response information of the i^{th} codeword. The response information indicates that the i^{th} codeword is successfully decoded or fails to be decoded.

In a possible implementation, the processing unit is further configured to set the i^{th} second data packet to a first fixed sequence, where the response information indicates that the i^{th} codeword fails to be decoded. The processing unit is further configured to encrypt an (i+1)^{th} second data packet based on an (i+1)^{th} random seed to obtain an (i+1)^{th} first data packet. The (i+1)^{th} random seed is generated based on the first fixed sequence. The processing unit is further configured to encode the (i+1)^{th} first data packet to obtain an (i+1)^{th} codeword. The transceiver unit is further configured to send the (i+1)^{th} codeword.

In a possible implementation, the processing unit is further configured to set an (i+1)^{th} random seed to a second fixed sequence, where the response information indicates that the i^{th} codeword fails to be decoded. The processing unit is further configured to encrypt an (i+1)^{th} second data packet based on the (i+1)^{th} random seed to obtain an (i+1)^{th} first data packet. The (i+1)^{th} random seed is generated based on the second fixed sequence. The processing unit is further configured to encode the (i+1)^{th} data packet to obtain an (i+1)^{th} codeword. The transceiver unit is further configured to send the (i+1)^{th} codeword.

In a possible implementation, before the i^{th} second data packet is set to the first fixed sequence or the (i+1)^{th} random seed is set to the second fixed sequence, the i^{th} codeword satisfies the following condition: The i^{th} codeword fails to be decoded and a quantity of retransmissions of the i^{th} codeword reaches a preset threshold.

In a possible implementation, the first fixed sequence is agreed on in advance.

In a possible implementation, the second fixed sequence is agreed on in advance.

In a possible implementation, the processing unit is further configured to encode a 1^{st} random seed to obtain a 1^{st} codeword. The transceiver unit is further configured to send the 1^{st} codeword.

According to a fifth aspect, a communication apparatus is provided. The communication apparatus may be the communication apparatus according to any possible implementation of the third aspect or the fourth aspect in the foregoing embodiments, or a chip disposed in the communication apparatus according to the third aspect or the fourth aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus is caused to perform the method performed by the communication apparatus according to any possible implementation of the first aspect, or the communication apparatus is caused to perform the method performed by the communication apparatus according to any possible implementation of the second aspect.

It should be understood that the communication interface may be implemented by using an antenna, a feeder, a codec, and the like in the communication apparatus. Alternatively, if the communication apparatus is a chip disposed in the communication apparatus, the communication interface may be an input/output interface of the chip, for example, an input/output pin. The communication apparatus may further include a transceiver, used by the communication apparatus to communicate with another device.

According to a sixth aspect, an embodiment of this application provides a chip system. The chip system includes a processor, and may further include a memory, configured to implement the method performed by the communication apparatus according to any possible implementation of the first aspect and the second aspect. In a possible implementation, the chip system further includes a memory, configured to store program instructions and/or data. The chip system may include a chip or may include a chip and another discrete component.

According to a seventh aspect, this application provides a computer-readable storage medium. The computer-readable storage medium stores a computer program or instructions, and when the computer program or the instructions are run, the methods performed by the communication apparatus in the foregoing aspects are implemented.

According to an eighth aspect, a computer program product is provided. The computer program product includes computer program code or instructions. When the computer program code or the instructions are run, the methods performed by the communication apparatus in the foregoing aspects are performed.

According to a ninth aspect, a communication apparatus is provided. The communication apparatus includes units or modules for performing the methods in the foregoing aspects.

According to a tenth aspect, a chip system is provided, including a logic circuit and an input/output interface. The logic circuit is configured to perform the method performed by the communication apparatus. The input/output interface is configured to communicate with another apparatus.

According to an eleventh aspect, a system is provided, including at least one communication apparatus for performing any possible implementation of the first aspect and at least one communication apparatus for performing any possible implementation of the second aspect.

For beneficial effect of the second aspect to the eleventh aspect and the implementations of the second aspect to the eleventh aspect, refer to descriptions of beneficial effect of the method in the first aspect and the implementations of the first aspect.

### BRIEF DESCRIPTION OF DRAWINGS

FIG. 1 is a diagram of a communication system according to an embodiment of this application;
FIG. 2 is a diagram of a keyless secure transmission architecture;
FIG. 3 is a diagram of a security module;
FIG. 4 is an example flowchart of a secure communication method according to an embodiment of this application;
FIG. 5 is a diagram of a secure processing method according to an embodiment of this application;
FIG. 6 is a diagram of still another secure communication method according to an embodiment of this application;
FIG. 7 is a diagram of yet another secure communication method according to an embodiment of this application;
FIG. 8 is a diagram of a communication apparatus according to an embodiment of this application;
FIG. 9 is a diagram of another communication apparatus according to an embodiment of this application;
FIG. 10 is a diagram of still another communication apparatus according to an embodiment of this application; and
FIG. 11 is a diagram of yet another communication apparatus according to an embodiment of this application.

### DESCRIPTION OF EMBODIMENTS

To facilitate understanding of technical solutions in embodiments of this application, technical terms provided in embodiments of this application are described.
(1) Random seed, also be referred to as random entropy or state information, or the like, with no restriction on naming in this application, is information used for security processing on a transport block, for example, used to encrypt the transport block or used to perform integrity protection on the transport block. Optionally, the random seed may be directly used for security processing on the transport block, or can be used to derive a key by using some algorithms such as a hash algorithm to perform security processing on the transport block.
   Optionally, the random seed may be used as an input and an output of a security module. A random seed output by the security module may be a function of a random seed input by the security module and a message input by the security module. The function has many implementations, for example, an output random seed is Seedₒᵤₜ = HASH(Seedᵢₙ, Mₒᵤₜ), namely, Seed; = HASH(Seedᵢ₋₁, EXT(Mᵢ₋₁, Seedᵢ₋₁)) . Herein, HASH represents a hash operation, EXT represents a randomness extraction operation, Seedᵢₙ represents the random seed input by the security module, Mₒᵤₜ represents the message input by the security module, EXT(Mᵢ₋₁, Seedᵢ₋₁) represents a randomness extraction operation on an (i - 1)^{th} random seed and an (i - 1)^{th} message.
(2) Data packet, also understood as a message packet, is a packet of to-be-transmitted information, for example, a source message packet or an encoded code block packet.

The following describes in detail embodiments of this application with reference to accompanying drawings of the specification.

The technical solutions in embodiments of this application may be applied to a new radio (New Radio, NR) system, a global system for mobile communications (Global System for Mobile communications, GSM) system, a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD), a universal mobile telecommunications system (Universal Mobile Telecommunications System, UMTS), a worldwide interoperability for microwave access (Worldwide Interoperability for Microwave Access, WiMAX) communication system, and the like. This is not limited herein.

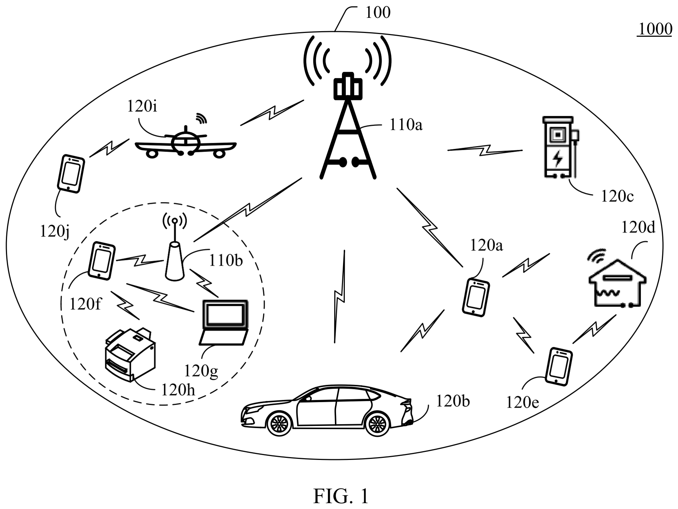

FIG. 1 is a diagram of an architecture of a communication system 1000 to which an embodiment of this application is applied. As shown in FIG. 1, the communication system includes a radio access network 100. The radio access network 100 may include at least one network device (for example, 110a and/or 110b in FIG. 1), and may further include at least one terminal apparatus (for example, at least one of 120a to 120j in FIG. 1). The terminal apparatus is connected to the network device in a wireless manner, and the network device is connected to a core network device in a wireless or wired manner. The terminal apparatuses may be connected to each other in a wired or wireless manner, and the network devices may be connected to each other in a wired or wireless manner. FIG. 1 is merely a diagram. The communication system may further include another network device, for example, may further include a wireless relay device and a wireless backhaul device, which are not shown in FIG. 1.

The network device is a network side device having a wireless transceiver function. The network device may be an apparatus that is in the radio access network (radio access network, RAN) and that provides a wireless communication function for a terminal device, and is referred to as a RAN device. For example, the network device may be a base station (base station), an evolved NodeB (evolved NodeB, eNodeB), a transmission reception point (transmission reception point, TRP), a next generation NodeB (next generation NodeB, gNB) in a 5^{th} generation (5^{th} generation, 5G) mobile communication system, a next generation NodeB in a 6^{th} generation (6^{th} generation, 6G) mobile communication system, a base station in a future mobile communication system, an access node in a Wi-Fi system, or the like; or may be a module or a unit that completes a part of functions of the base station, for example, may be a central unit (central unit, CU) or a distributed unit (distributed unit, DU). The CU herein completes functions of a radio resource control protocol and a packet data convergence layer protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete a function of a part of or all physical layers. For specific descriptions of the protocol layers, refer to related technical specifications of a 3^{rd} generation partnership project (3^{rd} generation partnership project, 3GPP). The network device may be a macro base station (for example, 110a in FIG. 1), may be a micro base station or an indoor base station (for example, 110b in FIG. 1), or may be a relay node, a donor node, or the like. A specific technology and a specific device form that are used by the network device are not limited in embodiments of this application.

In another possible scenario, a plurality of RAN nodes coordinate to assist a terminal in implementing radio access, and different RAN nodes separately implement some functions of a base station. For example, the RAN node may be a CU, a DU, a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal device is a user-side device having a wireless transceiver function. The terminal device may also be referred to as user equipment (user equipment, UE), a mobile station, a mobile terminal, or the like. The terminal apparatus may be widely used in various scenarios such as device-to-device (device-to-device, D2D), vehicle to everything (vehicle to everything, V2X) communication, machine type communication (machine type communication, MTC), an internet of things (internet of things, IoT), virtual reality, augmented reality, industrial control, autonomous driving, telemedicine, a smart grid, smart furniture, smart office, a smart wearable, smart transportation, and a smart city. The terminal apparatus may be a mobile phone, a tablet computer, a computer having a wireless transceiver function, a wearable device, a vehicle, an uncrewed aerial vehicle, a helicopter, an airplane, a ship, a robot, a robotic arm, a smart home device, or the like. A specific technology and a specific apparatus form that are used by the terminal apparatus are not limited in embodiments of this application.

The network device and the terminal device may be in fixed positions or may be movable. The network device and the terminal device may be deployed on the land, including an indoor device, an outdoor device, a handheld device, or a vehicle-mounted device; may be deployed on water; or may be deployed on an airplane, a balloon, and a satellite in the air. Application scenarios of the network device and the terminal device are not limited in embodiments of this application.

Roles of the network device and the terminal device may be relative. For example, a helicopter or an uncrewed aerial vehicle 120i in FIG. 1 may be configured as a mobile network device. For the terminal device 120j that accesses the radio access network 100 via 120i, the terminal device 120i is a network device. However, for the network device 110a, 120i is a terminal device, that is, 110a and 120i communicate with each other by using a radio air interface protocol. Certainly, 110a and 120i may alternatively communicate with each other by using an interface protocol between network devices. In this case, compared with 110a, 120i is also a network device. Therefore, the network device and the terminal device may be collectively referred to as a communication apparatus. 110a and 110b in FIG. 1 may be referred to as a communication apparatus having a function of a network device, and 120a to 120j in FIG. 1 may be referred to as a communication apparatus having a function of a terminal device.

Communication between a network device and a terminal device, between network devices, or between terminal devices may be performed by using a licensed spectrum, an unlicensed spectrum, or both a licensed spectrum and an unlicensed spectrum, or may be performed by using a spectrum below 6 gigahertz (gigahertz, GHz), a spectrum above 6 GHz, or both a spectrum below 6 GHz and a spectrum above 6 GHz. A spectrum resource used for wireless communication is not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as the smart grid, the industrial control, the smart transportation, and the smart city. The function of the terminal device may alternatively be performed by a module (for example, a chip or a modem) in the terminal device, or may be performed by an apparatus including the function of the terminal device.

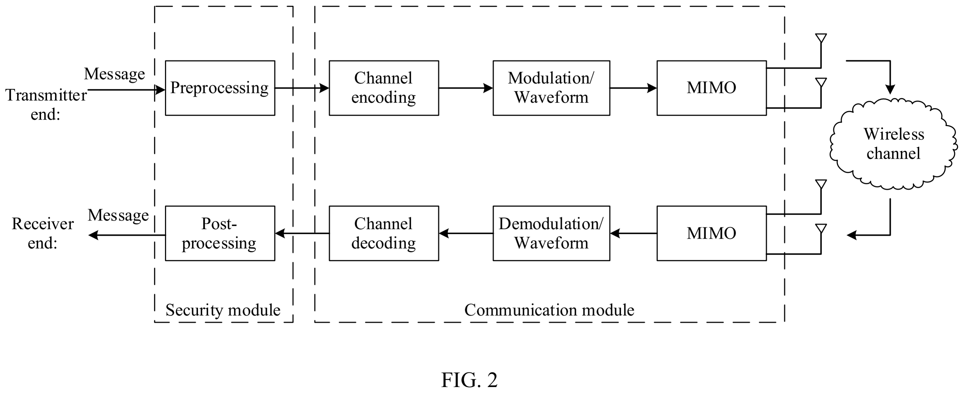

A keyless secure transmission architecture is shown in FIG. 2, and includes a communication module and a security module. The communication module uses a physical layer secure transmission technology, for example, secure coding, secure waveform modulation, or artificial noise, to implement information transmission and provide a basic security capability. The security module is constructed by using cryptographic primitives, so that the system can achieve provable security strength.

The keyless secure transmission architecture shown in FIG. 2 integrates the cryptography method and the physical layer secure technology, and aims to implement a keyless endogenous security mechanism. In this architecture, the physical layer secure technology is first used to create a very high error floor at a non-target receiver, for example, greater than 0.1, that is, random entropy is introduced into a non-target channel. Based on this, a preprocessing module is introduced into a legitimate transmitter. The module may be a randomness extractor, and can extract and spread random entropy introduced by the physical layer secure technology into the non-target channel, to obtain equivalent keys that are approximately evenly distributed and that are used to enable each bit in a message packet to obtain provable security strength.

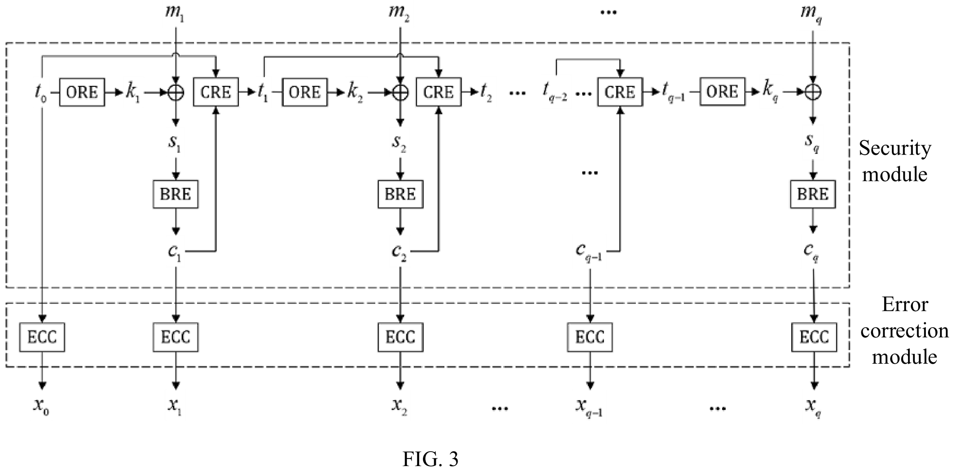

In the keyless secure transmission architecture, a core module is the security module, and corresponds to the preprocessing part in FIG. 2. An implementation structure is shown in FIG. 3. In FIG. 3, m₁, m₂, ..., and m_{q} indicate to-be-transmitted source message packets, and x₁, x₂, ..., and x_{q} indicate encoded packets output by a channel encoder. An error correction coding (error control coding, ECC) module may be a channel encoding module in FIG. 2. Channel encoding may use various encoding schemes widely used in a communication system, for example, low-density parity-check (low-density parity-check code, LDPC) encoding or polar (polar) encoding. It may be understood that the ECC module is not a component of the security module, and the ECC module is shown in FIG. 2 for integrity of composition.

A randomness extraction operation is implemented by the security module shown in FIG. 3, and t₀ is an initial random seed and may be a random vector. A working principle of the security module is as follows: In a packet, a bidirectional randomness extractor (bidirectional randomness extractor, BRE) extracts and spreads random entropy introduced into a non-target channel, to protect all bits in the packet, that is, a random error introduced by using the physical layer secure technology can be spread in a packet. Channel noise entropy of a previous packet is accumulated between a plurality of packets by using a compressive randomness extractor (compressive randomness extractor, CRE) and a one-way randomness extractor (one-way randomness extractor, ORE), to avoid a problem that required security strength cannot be achieved for some of the packets due to insufficient random entropy introduced into a channel. In other words, even if a channel condition of the non-target channel in a specific packet is good, and therefore sufficient random entropy cannot be introduced into the current packet by using the physical layer secure technology, channel noise entropy in a preceding packet can still be collected by using the CRE and the ORE, and the random error introduced by using the physical layer secure technology is aggregated and spread to the current packet.

The security module shown in FIG. 3 can implement error propagation across different packets, so that decoding performance of the non-target receiver is deteriorated. However, this also causes error propagation at a legitimate receiver end. FIG. 3 is used as an example. It is assumed that a decoding error occurs in a 1^{st} encoded packet x₁ received by a legitimate receiver end, that is, an error occurs in c₁. In this case, an error also occurs in a 1^{st} message packet m₁ restored by the legitimate receiver end. According to a working principle of the security module, restoration of each subsequent packet depends on a correct m₁, which means that m₁ functions as a key for restoration of the subsequent packet. Therefore, even if decoding of encoded packets such as x₂, x₃, ..., and x_{q} is all correct, message packets such as m₂, m₃, ..., and m_{q} cannot be correctly restored, which is unacceptable in actual communication.

In view of this, embodiments of this application provide a secure communication method. In the method, a receiver end may send response information of an i^{th} codeword to a transmitter end based on a decoding result of the i^{th} codeword. The response information may indicate that the i^{th} codeword is successfully decoded or fails to be decoded. Based on this, the transmitter end may determine, based on the response information, whether the receiver end correctly decodes the i^{th} codeword. When transmitting an (i+1)^{th} codeword, the transmitter end may adjust a random seed based on whether the receiver end correctly decodes the i^{th} codeword. This avoids further error propagation when the i^{th} codeword fails to be decoded.

In embodiments of this application, the transmitter end may be a terminal device or a network device, and the receiver end may be a terminal device or a network device. For example, when the transmitter end is a terminal device, the receiver end may be a network device or a terminal device. For another example, when the transmitter end is a network device, the receiver end may be a terminal device or a network device. For ease of description, in this application, the technical solutions in embodiments of this application are described in detail by using an example in which a network device is used as a transmitter end and a terminal device is used as a receiver end. Optionally, the secure communication method provided in embodiments of this application may be implemented by a RU in an O-RAN scenario.

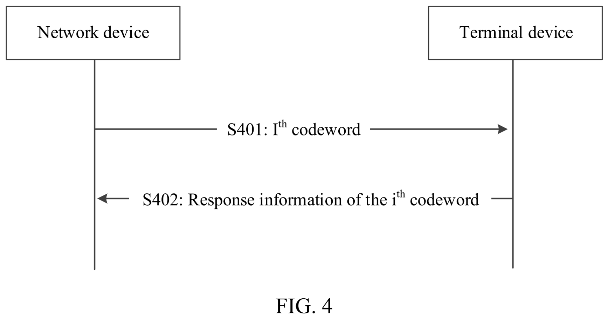

FIG. 4 is an example flowchart of a secure communication method according to an embodiment of this application. The method may include the following operations.

S401: A terminal device receives an i^{th} codeword.

Correspondingly, a network device sends the i^{th} codeword.

The i^{th} codeword may be obtained by encoding an i^{th} first data packet. The i^{th} first data packet may be obtained by performing security processing on an i^{th} second data packet based on an i^{th} random seed. For example, the i^{th} first data packet may be obtained by encrypting the i^{th} second data packet based on the i^{th} random seed.

If i is an integer greater than or equal to 2, the i^{th} random seed may be generated based on an (i-1)^{th} random seed and an (i-1)^{th} second data packet or an (i-1)^{th} first data packet. If i is equal to 1, the i^{th} random seed may be generated based on a random vector. It may be understood that the random seed may be used to directly perform security processing on the second data packet in a manner like bitwise exclusive OR, or the random seed shown in FIG. 3 may be used to derive a key to perform security processing on the second data packet in a manner like bitwise exclusive OR or encryption. This is not specifically limited in this application.

In a possible case, the network device may input the random seed and the second data packet to the security module shown in FIG. 3, to obtain the first data packet. Optionally, the security module may be a randomness extractor, configured to perform randomness extraction processing on the random seed and the second data packet.

FIG. 3 is used as an example. If i is equal to 1, a 1^{st} random seed, namely, t₀, may be generated based on the random vector. The network device may input the 1^{st} random seed t₀ and a 1^{st} second data packet m₁ to the security module. In this case, the security module may process m₁ based on t₀, and output a 2^{nd} random seed t₁ and a 1^{st} first data packet c₁. The 2^{nd} random seed t₁ may be obtained based on the 1^{st} first data packet c₁ and the 1^{st} random seed t₀ as shown in FIG. 3, or may be obtained based on the 1^{st} second data packet m₁ and the 1^{st} random seed t₀. This is not specifically limited in this application. The network device may add cyclic redundancy check (cyclic redundancy check, CRC) to the 1^{st} data packet c₁ and perform channel encoding, to obtain a 1^{st} codeword x₁.

If i is an integer greater than or equal to 2, for example, i is equal to 2, the network device may input the 2^{nd} random seed t₁ and a 2^{nd} second data packet m₂ to the security module. In this case, the security module may process m₂ based on t₁, and output a 3^{rd} random seed t₂ and a 2^{nd} first data packet c₂. The same rule applies to the rest. Similarly, the 3^{rd} random seed t₂ may be obtained based on the 2^{nd} first data packet c₂ and the 2^{nd} random seed t₁ shown in FIG. 3, or may be obtained based on the 2^{nd} second data packet m₂ and the 2^{nd} random seed t₁. This is not specifically limited in this application. The network device may add CRC to the 2^{nd} first data packet c₂ and perform channel encoding, to obtain a 2^{nd} codeword x₂.

Optionally, the 2^{nd} random seed and the 3^{rd} random seed to the i^{th} random seed may be stored in the security module and do not need to be output, for processing of subsequent second data packets.

It may be understood that, in FIG. 3, the security processing performed on the second data packet based on the random seed is shown by using the bitwise exclusive OR as an example. However, the security processing performed on the second data packet based on the random seed may alternatively include another manner. This is not specifically limited in this application. In addition, in this embodiment of this application, an example in which t₀, t₁, ..., and t_{q-1} in FIG. 3 are random seeds, and k₁, k₂, ..., and k_{q} are results of randomness extraction performed on the random seeds is used for description. However, k₁, k₂, ..., and k_{q} in FIG. 3 may alternatively be used as random seeds. This is not specifically limited in this application.

In a possible embodiment, the network device may simultaneously input a plurality of second data packets m₁, m₂, ..., and m_{q} and the 1^{st} random seed t₀ to the security module. In this case, the security module may process m₁ based on t₀, to obtain the 2^{nd} random seed t₁ and the 1^{st} first data packet c₁. The security module may process m₂ based on t₁, to obtain the 3^{rd} random seed t₂ and the 3^{rd} first data packet c₂. By analogy, the security module outputs a plurality of first data packets, namely, c₁, c₂, ..., and c_{q}. The network device may separately add CRC to the plurality of first data packets output by the security module, and then perform channel encoding independently, to form to-be-transmitted codewords. To improve efficiency, the network device may perform serial-to-parallel conversion on the plurality of first data packets output by the security module. In this way, CRC may be added to the plurality of first data packets separately and simultaneously, channel encoding may be performed independently, and then serial-to-parallel conversion is performed to form the to-be-transmitted codewords x₁, x₂, ..., and x_{q}.

Because synchronization of the 1^{st} random seed t₀ between the terminal device and the network device is a key to accurate transmission of the data packet, in a possible case, the network device may send the random vector or the 1^{st} random seed t₀ to the terminal device. For example, the network device may encode the 1^{st} random seed t₀ as a codeword x₀ and send the codeword x₀ to the terminal device. The terminal device may decode x₀, and perform CRC on a decoding result. If the check succeeds, the 1^{st} random seed t₀ can be obtained. If the check fails, it means that the terminal device fails to decode x₀. In this case, the terminal device may request the network device to retransmit x₀ until the terminal device successfully decodes x₀ to obtain the 1^{st} random seed t₀.

In another possible case, the terminal device and the network device may agree in advance on the 1^{st} random seed or a random vector used to generate the 1^{st} random seed and an algorithm for generating the 1^{st} random seed. For example, the 1^{st} random seed or the random vector used to generate the 1^{st} random seed and the algorithm for generating the 1^{st} random seed may be agreed on in a protocol-predefined or preconfigured manner. In this way, the network device may not send x₀ to the terminal device, or the network device may send x₀ to the terminal device. However, regardless of whether the terminal device successfully decodes x₀, x₀ does not need to be retransmitted.

S402: The terminal device sends response information of the i^{th} codeword based on a decoding result of the i^{th} codeword.

Correspondingly, the network device receives the response information of the i^{th} codeword.

For example, the terminal device may decode the i^{th} codeword, and perform cyclic redundancy check (cyclic redundancy check, CRC) check on the decoding result. If the check succeeds, it may be considered that the terminal device successfully decodes the i^{th} codeword; or if the check fails, it may be considered that the terminal device fails to decode the i^{th} codeword. If the terminal device successfully decodes the i^{th} codeword, the terminal device may send the response information of the i^{th} codeword to the network device to indicate that the i^{th} codeword is successfully decoded; or if the terminal device fails to decode the i^{th} codeword, the terminal device may send the response information of the i^{th} codeword to the network device to indicate that the i^{th} codeword fails to be decoded.

Optionally, the response information of the i^{th} codeword may indicate that the i^{th} codeword is successfully decoded or fails to be decoded. For example, the response information may be an acknowledgment (acknowledgment, ACK) or a negative acknowledgment (non-acknowledgment, NACK). The ACK may indicate that the i^{th} codeword is successfully decoded, and the NACK may indicate that the i^{th} codeword fails to be decoded.

In a possible case, the terminal device may perform inverse security processing, for example, inverse randomness extraction processing, on the i^{th} codeword that is successfully decoded, namely, the i^{th} first data packet. For example, the terminal device may process the i^{th} first data packet based on the i^{th} random seed, to obtain the i^{th} second data packet and an (i+1)^{th} random seed. Similarly, if i is equal to 1, the i^{th} random seed may be generated based on the random vector. If i is an integer greater than or equal to 2, the i^{th} random seed may be generated based on the (i-1)^{th} random seed and the (i-1)^{th} second data packet or the (i-1)^{th} first data packet.

It may be understood that, that the terminal device can generate the i^{th} random seed based on the (i-1)^{th} first data packet or the (i-1)^{th} second data packet means that the (i-1)^{th} codeword is successfully decoded or the (i-1)^{th} codeword is successfully transmitted. If the terminal device fails to decode the (i-1)^{th} codeword, the terminal device cannot obtain the (i-1)^{th} first data packet or the (i-1)^{th} second data packet.

FIG. 3 is used as an example. If i is equal to 1, the 1^{st} random seed, namely, t₀, may be generated based on the random vector. The terminal device may input the 1^{st} random seed t₀ and the 1^{st} first data packet c₁ to an inverse security module. In this case, the inverse security module may process c₁ based on t₀, and output the 2^{nd} random seed t₁ and the 1^{st} second data packet m₁.

If i is an integer greater than or equal to 2, for example, i is equal to 2, the terminal device may input the 2^{nd} random seed t₁ and the 2^{nd} first data packet c₂ to the inverse security module. In this case, the inverse security module may process c₂ based on t₁, and output the 3^{rd} random seed t₂ and the 3^{rd} second data packet m₂. The same rule applies to the rest. Optionally, the 2^{nd} random seed and the 3^{rd} random seed to the i^{th} random seed may be stored in the inverse security module and do not need to be output, for processing of subsequent first data packets.

It should be noted that S402 may be performed after the i^{th} second data packet is obtained, or may be performed before the i^{th} second data packet is obtained, or may be performed simultaneously with an inverse security processing operation performed on the i^{th} second data packet. This is not specifically limited in this application.

In a possible implementation, if the response information indicates that the i^{th} codeword is successfully decoded, the network device may perform security processing on an (i+1)^{th} second data packet based on the (i+1)^{th} random seed obtained based on the i^{th} second data packet or the i^{th} first data packet and the i^{th} random seed. It may be understood that, for an operation of performing security processing on the (i+1)^{th} second data packet based on the (i+1)^{th} random seed, refer to the operation of performing security processing on the i^{th} second data packet based on the i^{th} random seed. Details are not described herein again.

Because the terminal device successfully decodes the i^{th} codeword, the terminal device may obtain the correct i^{th} first data packet or the correct i^{th} second data packet, so that the (i+1)^{th} random seed can be obtained based on the i^{th} first data packet or the i^{th} second data packet and the i^{th} random seed, and a subsequent inverse security processing operation is not affected. It should be noted that, for an operation of performing inverse security processing on a successfully decoded (i+1)^{th} codeword based on the (i+1)^{th} random seed, refer to the operation of performing inverse security processing on the successfully decoded i^{th} codeword based on the i^{th} random seed. Details are not described herein again.

However, if the response information indicates that the i^{th} codeword fails to be decoded, the terminal device cannot obtain the correct i^{th} first data packet or the correct i^{th} second data packet. Therefore, if the (i+1)^{th} data packet is obtained based on the i^{th} first data packet or the i^{th} second data packet and the i^{th} random seed, an error of the i^{th} codeword is spread to a plurality of subsequent codewords and data packets. To avoid this problem, the network device and the terminal device may update the (i+1)^{th} random seed when the i^{th} codeword fails to be decoded. The following provides descriptions by using a case 1 and a case 2.

Case 1: The i^{th} second data packet is set to a first fixed sequence.

In the case 1, the terminal device fails to decode the i^{th} codeword xᵢ. Therefore, even if the terminal device performs an inverse security processing operation on the decoding result of xᵢ, the terminal device cannot obtain the accurate i^{th} second data packet mᵢ. In this case, the terminal device may set the i^{th} second data packet mᵢ to the first fixed sequence. It may be understood that the first fixed sequence is agreed on by the terminal device and the network device in advance, for example, may be a sequence known to both the terminal device and the network device, for example, an all-zero sequence or an all-one sequence.

Because the terminal device fails to decode the i^{th} codeword xᵢ, the terminal device sends the response information to the network device, for example, the NACK indicating that the i^{th} codeword fails to be decoded. The network device may learn, based on the NACK, that the terminal device fails to decode the i^{th} codeword, and the network device may also set the i^{th} second data packet mᵢ to the first fixed sequence. The network device may generate an (i+1)^{th} first data packet cᵢ₊₁ based on mᵢ that is set to the first fixed sequence and the (i+1)^{th} second data packet mᵢ₊₁.

For example, the network device may recalculate the (i+1)^{th} random seed tᵢ₊₁ based on the first fixed sequence. For example, the network device may generate the (i+1)^{th} random seed tᵢ₊₁ based on the first fixed sequence and the i^{th} random seed tᵢ, or the network device may reset the i^{th} random seed based on the first fixed sequence, and generate the (i+1)^{th} random seed tᵢ₊₁ based on the reset i^{th} random seed. The network device may perform security processing on the (i+1)^{th} second data packet mᵢ₊₁ based on the (i+1)^{th} random seed tᵢ₊₁, to obtain the (i+1)^{th} first data packet cᵢ₊₁. The network device may add CRC to the (i+1)^{th} first data packet cᵢ₊₁, perform channel encoding to obtain the (i+1)^{th} codeword xᵢ₊₁, and send the (i+1)^{th} codeword xᵢ₊₁ to the terminal device.

The terminal device may decode the (i+1)^{th} codeword xᵢ₊₁, and perform CRC. If the check succeeds, the terminal device may send the ACK to the network device, and may perform an inverse security processing operation on the decoded (i+1)^{th} codeword xᵢ₊₁, namely, the (i+1)^{th} first data packet cᵢ₊₁. For example, the terminal device may recalculate the (i+1)^{th} random seed tᵢ₊₁ based on the first fixed sequence. For example, the terminal device may generate the (i+1)^{th} random seed tᵢ₊₁ based on the first fixed sequence and the i^{th} random seed tᵢ, or the terminal device may reset the i^{th} random seed based on the first fixed sequence, and generate the (i+1)^{th} random seed tᵢ₊₁ based on the reset i^{th} random seed. The terminal device may perform inverse security processing on the (i+1)^{th} first data packet cᵢ₊₁ based on the (i+1)^{th} random seed tᵢ₊₁, to obtain an (i+2)^{th} random seed tᵢ₊₂ and the (i+1)^{th} second data packet mᵢ₊₁. If the check fails, the terminal device may send the NACK to the network device, set the (i+1)^{th} second data packet mᵢ₊₁ to the first fixed sequence, and repeat the foregoing operations after receiving an (i+2)^{th} codeword xᵢ₊₂.

FIG. 3 is used as an example. The terminal device fails to decode the 1^{st} codeword x₁, and sends the NACK to the network device. The terminal device and the network device may set the 1^{st} second data packet m₁ to the first fixed sequence. The network device may recalculate the 2^{nd} random seed t₂ based on the first fixed sequence. The network device may input the 2^{nd} random seed t₂ and the 2^{nd} second data packet m₂ to the security module for randomness extraction processing. The security module may perform security processing on the 2^{nd} second data packet m₂ based on the 2^{nd} random seed t₁, to obtain the 3^{rd} random seed t₂ and the 2^{nd} first data packet c₂. The network device may add CRC to the 2^{nd} first data packet c₁, perform channel encoding to generate the 2^{nd} codeword x₂, and send the 2^{nd} codeword x₂ to the terminal device.

The terminal device may perform CRC after decoding the 2^{nd} codeword. If the check succeeds, the terminal device may recalculate the 2^{nd} random seed t₂ based on the first fixed sequence. The terminal device may input the 2^{nd} random seed t₂ and the 2^{nd} first data packet c₂ to the inverse security module for inverse randomness extraction processing. The inverse security module may generate the 2^{nd} random seed t₁ based on t₀ and the first fixed sequence, and perform inverse security processing on the 2^{nd} first data packet c₂ based on the 2^{nd} random seed t₁, to obtain the 3^{rd} random seed t₂ and the 2^{nd} second data packet m₂. If the check fails, the terminal device may set the 2^{nd} second data packet m₂ to the first fixed sequence, and repeat the foregoing operations.

Based on the foregoing solution, because randomness extraction processing is performed on the second data packet based on the random seed, if the terminal device fails to decode the codeword, the terminal device cannot obtain the correct second data packet by performing inverse randomness extraction processing on the decoding result, and the error spreads between different data packets. Based on the case 1, when a decoding error occurs, the second data packet is set to the fixed sequence, so that the decoding error can be prevented from spreading on the terminal device. In addition, due to independence of a non-target channel and a legitimate channel, a sequence number of a data packet that is of a non-target receiver and on which the decoding error occurs cannot be completely the same as that of the terminal device. This means that the non-target receiver cannot maintain synchronization of the random seed with the network device and the terminal device. Therefore, it can be ensured that the decoding error of the non-target receiver is spread. In this way, communication security can be improved without affecting transmission performance of a legitimate user.

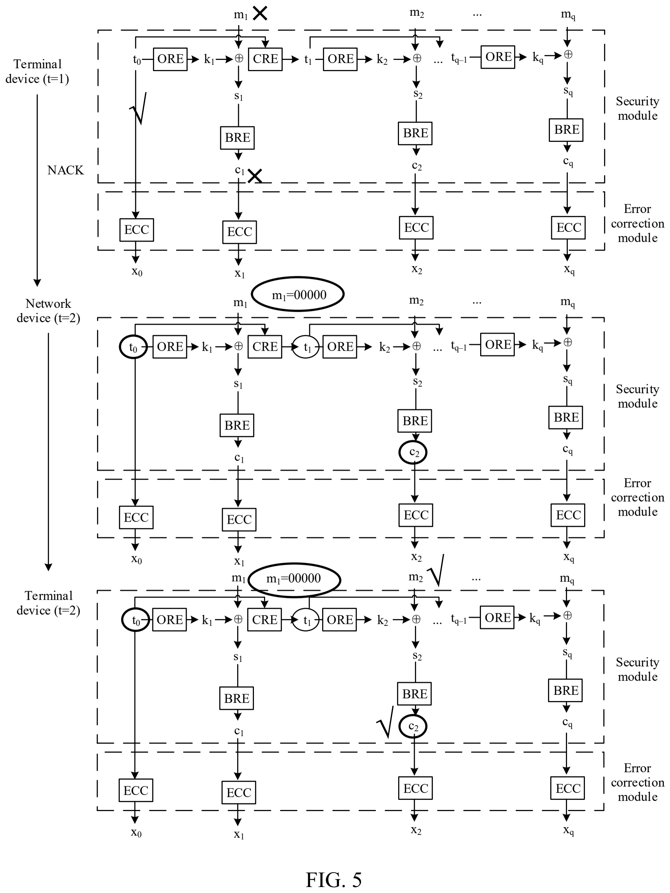

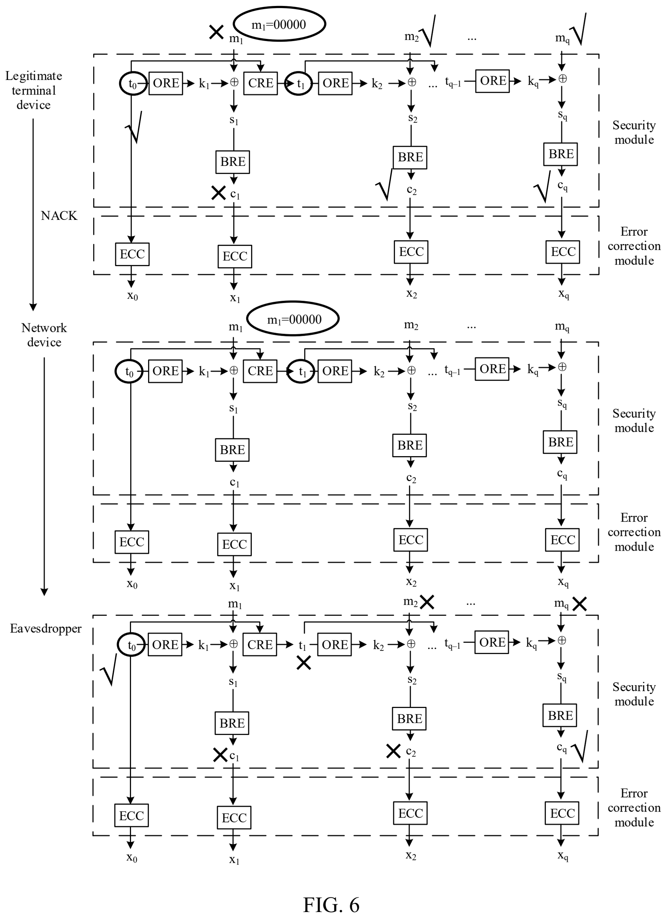

The following describes cases of the legitimate terminal device and the non-target receiver by using FIG. 5 and FIG. 6.

For ease of understanding the technical solution in the case 1, a transmission delay may be ignored in FIG. 5. Refer to FIG. 5. It is assumed that a legitimate terminal device fails to correctly decode x₁ at a moment t=1. In this case, m₁ cannot be correctly restored. The legitimate terminal device sets m₁ to an all-zero sequence, and feeds back a NACK to a network device. At a moment t=2, the network device needs to send a new data packet m₂. The network device may first reset m₁ to an all-zero sequence (consistent with the legitimate terminal device), then recalculate t₁ by using a security module, and obtain c₂ based on t₁ and m₂. The network device then adds CRC to c₂, performs channel encoding to obtain x₂, and sends x₂. The legitimate terminal device receives the codeword x₂ at the moment t=2. It is assumed that the legitimate terminal device correctly decodes x₂, so that correct c₂ can be obtained. To restore the data packet m₂, the legitimate terminal device needs to recalculate t₁ based on the reset m₁ (the all-zero sequence), and input both t₁ and c₂ to an inverse security module, to implement an inverse operation of the security module on the network device side.

It can be learned from FIG. 5 that, because the network device and the legitimate terminal device reset m₁ to a same sequence (the all-zero sequence), t₁ used when the legitimate terminal device restores m₂ is consistent with t₁ used by the network device. In this way, on the premise that x₂ is correctly decoded, m₂ can be correctly restored. In other words, the decoding error of the legitimate terminal device at the moment t=1 is not spread by the security module, and consequently, affects subsequent restoration of data packets.

For the non-target receiver, due to use of a physical layer secure technology, a decoding error probability of the non-target receiver is significantly higher than that of the legitimate terminal device. This means that there is an extremely high probability that the following case occurs in practice:

For one or more packets, the legitimate terminal device correctly decodes the packet, but the non-target receiver fails to correctly decode the packet. As shown in FIG. 6, a legitimate terminal device correctly decodes x₂, but a non-target receiver fails to correctly decode x₂. Because the non-target receiver fails to correctly decode x₂, c₂ cannot be correctly restored, and t₂ cannot be correctly calculated. In this way, even if all subsequent codewords (x₃, x₄, ...) are correctly decoded, corresponding data packets (m₃, m₄, ...) cannot be correctly restored. Therefore, error propagation effect still exists, and transmission security can be ensured.

Case 2: The (i+1)^{th} random seed is set to a second fixed sequence.

In the case 2, the terminal device fails to decode the i^{th} codeword xᵢ. Therefore, even if the terminal device performs an inverse security processing operation on the decoding result of xᵢ, the terminal device cannot obtain the accurate i^{th} second data packet mᵢ. In this case, the terminal device may set the (i+1)^{th} random seed tᵢ to the second fixed sequence. It may be understood that the second fixed sequence is agreed on by the terminal device and the network device in advance, for example, may be a sequence known to both the terminal device and the network device, for example, an all-zero sequence or an all-one sequence. Optionally, the terminal device may discard the i^{th} second data packet mᵢ.

Because the terminal device fails to decode the i^{th} codeword xᵢ, the terminal device sends the response information to the network device, for example, the NACK indicating that the i^{th} codeword fails to be decoded. The network device may learn, based on the NACK, that the terminal device fails to decode the i^{th} codeword, and the network device may also set the (i+1)^{th} random seed to the second fixed sequence. The network device may generate the (i+1)^{th} first data packet cᵢ₊₁ based on the second fixed sequence and the (i+1)^{th} second data packet mᵢ₊₁.

For example, the network device may generate the (i+1)^{th} random seed tᵢ₊₁ based on the second fixed sequence, and perform security processing on the (i+1)^{th} second data packet mᵢ₊₁ based on the (i+1)^{th} random seed tᵢ₊₁, to obtain the (i+1)^{th} first data packet cᵢ₊₁. The network device may add CRC to the (i+1)^{th} first data packet cᵢ₊₁, perform channel encoding to obtain the (i+1)^{th} codeword xᵢ₊₁, and send the (i+1)^{th} codeword xᵢ₊₁ to the terminal device.

The terminal device may decode the (i+1)^{th} codeword xᵢ₊₁, and perform CRC. If the check succeeds, the terminal device may send the ACK to the network device, and may perform an inverse security processing operation on the decoded (i+1)^{th} codeword xᵢ₊₁, namely, the (i+1)^{th} first data packet cᵢ₊₁. For example, the terminal device may generate the (i+1)^{th} random seed tᵢ₊₁ based on the second fixed sequence. The terminal device may perform inverse security processing on the (i+1)^{th} first data packet cᵢ₊₁ based on the (i+1)^{th} random seed tᵢ₊₁, to obtain the (i+2)^{th} random seed tᵢ₊₂ and the (i+1)^{th} second data packet mᵢ₊₁. If the check fails, the terminal device may send the NACK to the network device, set the (i+1)^{th} random seed tᵢ₊₁ to the second fixed sequence, and repeat the foregoing operations after receiving the (i+2)^{th} codeword xᵢ₊₂.

FIG. 3 is used as an example. The terminal device fails to decode the 1^{st} codeword x₁, and sends the NACK to the network device. The terminal device and the network device may set the 1^{st} random seed t₁ to the second fixed sequence. The network device may recalculate the 2^{nd} random seed t₂ based on the second fixed sequence. The network device may input the 2^{nd} random seed t₂ and the 2^{nd} second data packet m₂ to the security module for randomness extraction processing. The security module may perform security processing on the 2^{nd} second data packet m₂ based on the 2^{nd} random seed t₁, to obtain the 3^{rd} random seed t₂ and the 2^{nd} first data packet c₂. The network device may add CRC to the 2^{nd} first data packet c₁, perform channel encoding to generate the 2^{nd} codeword x₂, and send the 2^{nd} codeword x₂ to the terminal device.

The terminal device may perform CRC after decoding the 2^{nd} codeword. If the check succeeds, the terminal device may recalculate the 2^{nd} random seed t₁ based on the second fixed sequence. The terminal device may input the 2^{nd} random seed t₁ and the 2^{nd} first data packet c₂ to the inverse security module for inverse randomness extraction processing. The inverse security module may perform inverse security processing on the 2^{nd} first data packet c₂ based on the 2^{nd} random seed t₁, to obtain the 3^{rd} random seed t₂ and the 2^{nd} second data packet m₂. If the check fails, the terminal device may set the 2^{nd} random seed t₂ to the second fixed sequence, and repeat the foregoing operations.

Based on the foregoing solution, because randomness extraction processing is performed on the second data packet based on the random seed, if the terminal device fails to decode the codeword, the terminal device cannot obtain the correct second data packet by performing inverse randomness extraction processing on the decoding result, and the error spreads between different data packets. Based on the case 2, when a decoding error occurs, the random seed is set to the fixed sequence, so that the decoding error can be prevented from spreading on the terminal device. In addition, due to independence of a non-target channel and a legitimate channel, a sequence number of a data packet that is of a non-target receiver and on which the decoding error occurs cannot be completely the same as that of the terminal device. This means that the non-target receiver cannot maintain synchronization of the random seed with the network device and the terminal device. Therefore, it can be ensured that the decoding error of the non-target receiver is spread. In this way, communication security is improved without affecting transmission performance of a legitimate user.

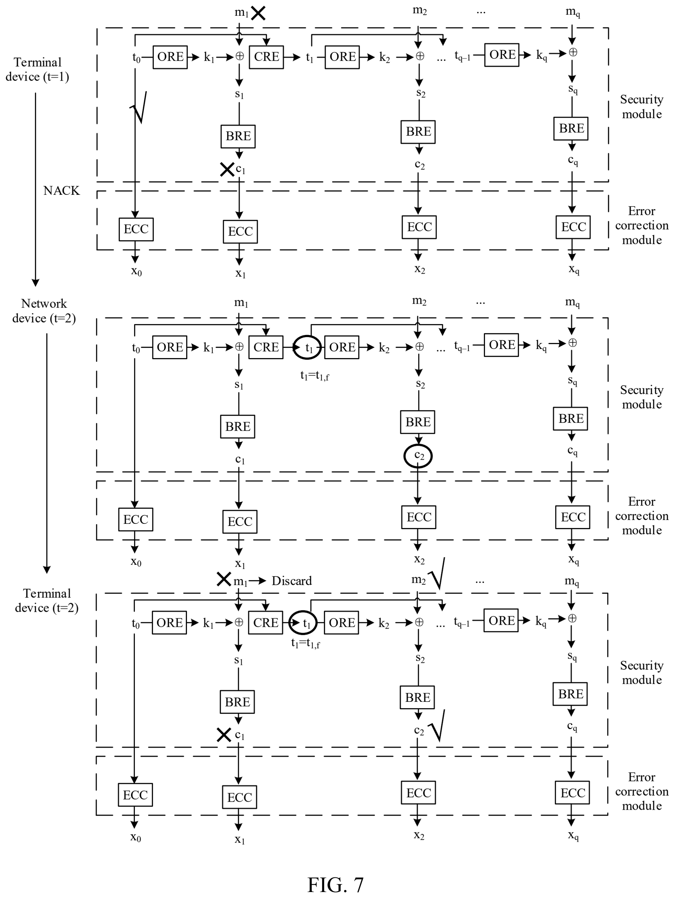

The following describes cases of the legitimate terminal device and the non-target receiver by using FIG. 7.

For ease of understanding the technical solution in the case 2, a transmission delay may be ignored in FIG. 7. Refer to FIG. 7. It is assumed that a legitimate terminal device fails to correctly decode x₁ at a moment t=1. In this case, m₁ cannot be correctly restored. The legitimate terminal device discards m₁, sets t₁ to t_{1,f} (a fixed sequence), and feeds back a NACK to a network device. At a moment t=2, the network device needs to send a new data packet m₂. The network device may first set t₁ to t_{1,f} (consistent with the legitimate terminal device), then recalculate t₁ by using a security module, and obtain c₂ based on t₁ and m₂. The network device then adds CRC to c₂, performs channel encoding to obtain x₂, and sends x₂. The legitimate terminal device receives the codeword x₂ at the moment t=2. It is assumed that the legitimate terminal device correctly decodes x₂, so that correct c₂ can be obtained. To restore the data packet m₂, the legitimate terminal device needs to input t_{1,f} and c₂ together to an inverse security module, to implement an inverse operation of the security module on the network device side.

It can be learned from FIG. 7 that, because the legitimate terminal device resets t₁ to t_{1,f}, t₁ used when the legitimate terminal device restores m₂ is consistent with t₁ used by the network device. In this way, on the premise that x₂ is correctly decoded, m₂ can be correctly restored. In other words, the decoding error of the legitimate terminal device at the moment t=1 is not spread by the security module, and consequently, affects subsequent restoration of data packets.

For the non-target receiver, due to use of a physical layer secure technology, a decoding error probability of the non-target receiver is significantly higher than that of the legitimate terminal device. This means that there is an extremely high probability that the following case occurs in practice:

For one or more data packets, the legitimate terminal device correctly decodes the packet, but the non-target receiver fails to correctly decode the packet. It can be learned from analysis similar to that in FIG. 6 that, if there is a data packet that is correctly decoded by the legitimate terminal device but fails to be correctly decoded by the non-target receiver, even if the non-target receiver correctly decodes all subsequent encoded packets, corresponding information packets cannot be correctly restored. Therefore, error propagation effect still exists, and transmission security can be ensured.

In a possible implementation, before the case 1 and the case 2, the network device may retransmit the i^{th} codeword xᵢ to the terminal device. tᵢ used in the retransmission is the same as tᵢ used in S401. For example, in S402, if the terminal device sends the NACK to the network device to indicate that the i^{th} codeword fails to be decoded, the network device may retransmit the i^{th} codeword. The terminal device may decode the retransmitted i^{th} codeword, and perform CRC. Optionally, when decoding the retransmitted i^{th} codeword, the terminal device may combine the retransmitted i^{th} codeword with the codeword in S401, to improve decoding performance.

If the CRC succeeds, it may be understood that the terminal device successfully decodes the retransmitted i^{th} codeword, and the terminal device may send the ACK to the network device. The terminal device may perform inverse security processing, for example, inverse randomness extraction processing, on the i^{th} codeword that is successfully decoded, namely, the i^{th} first data packet. For implementation, refer to the related content in S402. Details are not described herein again.

If the CRC fails, it means that the terminal device fails to decode the retransmitted i^{th} codeword, and the terminal device may send the NACK to the network device. The network device may retransmit the i^{th} codeword again until a maximum quantity of retransmissions is reached.

It may be understood that, if the terminal device still fails to decode the i^{th} codeword when the maximum quantity of retransmissions is reached, the terminal device and the network device may perform the technical solutions shown in the case 1 and the case 2. If the terminal device successfully decodes the i^{th} codeword in the retransmission process, the terminal device may perform inverse security processing on the i^{th} codeword that is successfully decoded, namely, the i^{th} first data packet. Details are not described herein again.

The following describes, with reference to the accompanying drawings, communication apparatuses for implementing the foregoing method in embodiments of this application. Therefore, all the foregoing content may be used in the following embodiments. Repeated content is not described again.

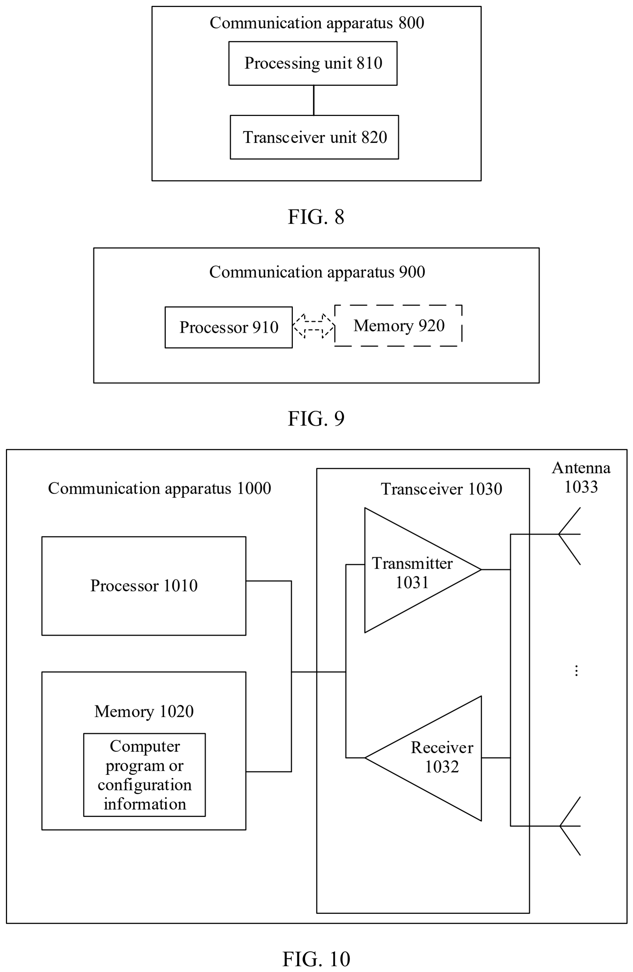

FIG. 8 is a block diagram of a communication apparatus 800 according to an embodiment of this application. The communication apparatus 800 may correspondingly implement functions or steps implemented by the terminal device or the network device in the foregoing method embodiments. The communication apparatus may include a processing unit 810 and a transceiver unit 820. Optionally, a storage unit may be further included. The storage unit may be configured to store instructions (code or a program) and/or data. The processing unit 810 and the transceiver unit 820 may be coupled to the storage unit. For example, the processing unit 810 may read the instructions (the code or the program) and/or the data in the storage unit, to implement corresponding methods. The foregoing units may be independently disposed, or may be partially or completely integrated.

Optionally, the transceiver unit 820 may include a sending unit and a receiving unit. The sending unit may be configured to perform all sending operations performed by the communication apparatus 800, and the receiving unit may be configured to perform all receiving operations performed by the communication apparatus 800.

In some possible implementations, the communication apparatus 800 can correspondingly implement behavior and functions of the terminal device and the like in the foregoing method embodiments. For example, the communication apparatus 800 may be the terminal device, or may be a component (for example, a chip or a circuit) used in the terminal device. The transceiver unit 820 may be configured to perform all receiving or sending operations performed by the terminal device in the embodiment shown in FIG. 4, for example, S401 and S402 in the embodiment shown in FIG. 4, and/or another process used to support the technology described in this specification. The processing unit 810 is configured to perform all operations other than the receiving and sending operations performed by the terminal device in the embodiment shown in FIG. 4.

For example, the transceiver unit 820 is configured to receive an i^{th} codeword. The i^{th} codeword is obtained by encoding an i^{th} first data packet. The i^{th} first data packet is obtained by encrypting an i^{th} second data packet based on an i^{th} random seed. If i is an integer greater than or equal to 2, the i^{th} random seed is generated based on an (i-1)^{th} random seed and an (i-1)^{th} second data packet or the i^{th} random seed is generated based on an (i-1)^{th} random seed and an (i-1)^{th} first data packet; or if i is equal to 1, the i^{th} random seed is generated based on a random vector. The processing unit 810 is configured to generate response information of the i^{th} codeword based on a decoding result of the i^{th} codeword. The transceiver unit 820 is further configured to send the response information of the i^{th} codeword. The response information indicates that the i^{th} codeword is successfully decoded or fails to be decoded.

In some possible implementations, the communication apparatus 800 can correspondingly implement behavior and functions of the network device in the foregoing method embodiments. For example, the communication apparatus 800 may be the network device, or may be a component (for example, a chip or a circuit) used in the network device. The transceiver unit 820 may be configured to perform all receiving or sending operations performed by the network device in the embodiment shown in FIG. 4, for example, S401 and S402 in the embodiment shown in FIG. 4, and/or another process used to support the technology described in this specification. The processing unit 810 is configured to perform all operations other than the receiving and sending operations performed by the network device in the embodiment shown in FIG. 4.

For example, the processing unit 810 is configured to encrypt an i^{th} second data packet based on an i^{th} random seed to obtain an i^{th} first data packet. If i is an integer greater than or equal to 2, the i^{th} random seed is generated based on an (i-1)^{th} random seed and an (i-1)^{th} first data packet; or if i is equal to 1, the i^{th} random seed is generated based on a random vector. The processing unit 810 is further configured to encode the i^{th} first data packet to obtain an i^{th} codeword. The transceiver unit 820 is configured to send the i^{th} codeword. The transceiver unit 820 is further configured to receive response information of the i^{th} codeword. The response information indicates that the i^{th} codeword is successfully decoded or fails to be decoded.

For operations performed by the processing unit 810 and the transceiver unit 820, refer to the related descriptions in the foregoing method embodiments.

It should be understood that the processing unit 810 in this embodiment of this application may be implemented by a processor or a processor-related circuit component, and the transceiver unit 820 may be implemented by a transceiver, a transceiver-related circuit component, or a communication interface.

Based on a same concept, as shown in FIG. 9, an embodiment of this application provides a communication apparatus 900. The communication apparatus 900 includes a processor 910. Optionally, the communication apparatus 900 may further include a memory 920, configured to store instructions executed by the processor 910, or store input data required by the processor 910 to run the instructions, or store data generated after the processor 910 runs the instructions. The processor 910 can implement, by using the instructions stored in the memory 920, the method shown in the foregoing method embodiments.

Based on a same concept, as shown in FIG. 10, an embodiment of this application provides a communication apparatus 1000. The communication apparatus 1000 may be a chip or a chip system. Optionally, in this embodiment of this application, the chip system may include a chip, or may include a chip and another discrete device.

The communication apparatus 1000 may include at least one processor 1010. The processor 1010 is coupled to a memory. Optionally, the memory may be located inside or outside the apparatus. For example, the communication apparatus 1000 may further include at least one memory 1020. The memory 1020 stores a computer program, configuration information, a computer program or instructions, and/or data necessary for implementing any one of the foregoing embodiments. The processor 1010 may execute the computer program stored in the memory 1020, to complete the method in any one of the foregoing embodiments.

The coupling in this embodiment of this application is an indirect coupling or a communication connection between apparatuses, units, or modules in an electrical form, a mechanical form, or another form, and is used for information exchange between the apparatuses, the units, or the modules. The processor 1010 and the memory 1020 may operate cooperatively. In embodiments of this application, a specific connection medium between a transceiver 1030, the processor 1010, and the memory 1020 is not limited.

The communication apparatus 1000 may further include a transceiver 1030, and the communication apparatus 1000 may perform information exchange with another device by using the transceiver 1030. The transceiver 1030 may be a circuit, a bus, a transceiver, or any other apparatus that can be configured to exchange information, or is referred to as a signal transceiver unit. As shown in FIG. 10, the transceiver 1030 includes a transmitter 1031, a receiver 1032, and an antenna 1033. In addition, when the communication apparatus 1000 is a chip type apparatus or circuit, the transceiver in the communication apparatus 1000 may alternatively be an input/output circuit and/or a communication interface, and may input data (or is referred to as receiving data) and output data (or is referred to as sending data). The processor is an integrated processor, a microprocessor, or an integrated circuit, and the processor may determine output data based on input data.

In a possible implementation, the communication apparatus 1000 may be used in a terminal device. Specifically, the communication apparatus 1000 may be a terminal device, or may be an apparatus that can support the terminal device in implementing functions of the terminal device in any one of the foregoing embodiments. The memory 1020 stores a computer program, a computer program or instructions, and/or data necessary for implementing a function of the communication apparatus in any one of the foregoing embodiments. The processor 1010 may execute the computer program stored in the memory 1020, to complete the method performed by the terminal device in any one of the foregoing embodiments.

In a possible implementation, the communication apparatus 1000 may be used in a network device. Specifically, the communication apparatus 1000 may be the network device, or may be an apparatus that can support the network device in implementing functions of the network device in any one of the foregoing embodiments. The memory 1020 stores a computer program, a computer program or instructions, and/or data necessary for implementing functions of the network device in any one of the foregoing embodiments. The processor 1010 may execute the computer program stored in the memory 1020, to complete the method performed by the network device in any one of the foregoing embodiments.

The communication apparatus 1000 provided in this embodiment may be used in the terminal device to complete the method performed by the terminal device, or may be used in the network device to complete the method performed by the network device. Therefore, for technical effect that can be achieved by the communication apparatus, refer to the foregoing method embodiments. Details are not described herein again.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed and completed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that can be configured to carry or store expected program code in a form of an instruction or a data structure and that can be accessed by a computer, but is not limited thereto. The memory in embodiments of this application may alternatively be a circuit or any other apparatus that can implement a storage function, and is configured to store a computer program, a computer program or instructions, and/or data.

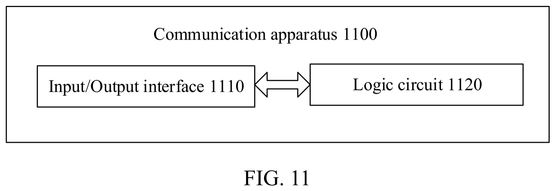

Based on the foregoing embodiments, refer to FIG. 11. An embodiment of this application further provides another communication apparatus 1100, including: an input/output interface 1110 and a logic circuit 1120. The input/output interface 1110 is configured to receive code instructions and transmit the code instructions to the logic circuit 1120; and the logic circuit 1120 is configured to run the code instructions to perform the method performed by the terminal device or the network device in any one of the foregoing embodiments.

Optionally, the input/output interface 1110 may be an interface on a chip, and the logic circuit 1120 may be one or more processors. Optionally, the one or more processors may be located in the apparatus, or may be located outside the apparatus.

The following describes in detail an operation performed by the communication apparatus used in a terminal device or a network device.

In an optional implementation, the communication apparatus 1100 may be used in the terminal device, to perform the method performed by the terminal device, specifically, for example, the method performed by the terminal device in the embodiment shown in FIG. 4.

The input/output interface 1110 is configured to input an i^{th} codeword. The i^{th} codeword is obtained by encoding an i^{th} first data packet. The i^{th} first data packet is obtained by encrypting an i^{th} second data packet based on an i^{th} random seed. If i is an integer greater than or equal to 2, the i^{th} random seed is generated based on an (i-1)^{th} random seed and an (i-1)^{th} second data packet or the i^{th} random seed is generated based on an (i-1)^{th} random seed and an (i-1)^{th} first data packet; or if i is equal to 1, the i^{th} random seed is generated based on a random vector. The logic circuit 1120 is configured to generate response information of the i^{th} codeword based on a decoding result of the i^{th} codeword. The input/output interface 1110 is further configured to output the response information of the i^{th} codeword. The response information indicates that the i^{th} codeword is successfully decoded or fails to be decoded.

The communication apparatus 1100 provided in this embodiment may be used in the terminal device to complete the method performed by the terminal device. Therefore, for technical effect that can be achieved by the communication apparatus, refer to the foregoing method embodiments. Details are not described herein again.

In an optional implementation, the communication apparatus 1100 may be used in the network device to perform the method performed by the network device, specifically, for example, the method performed by the network device in the embodiment shown in FIG. 4.

The logic circuit 1120 is configured to encrypt an i^{th} second data packet based on an i^{th} random seed to obtain an i^{th} first data packet. If i is an integer greater than or equal to 2, the i^{th} random seed is generated based on an (i-1)^{th} random seed and an (i-1)^{th} first data packet; or if i is equal to 1, the i^{th} random seed is generated based on a random vector. The logic circuit 1120 is further configured to encode the i^{th} first data packet to obtain an i^{th} codeword. The input/output interface 1110 is configured to output the i^{th} codeword. The input/output interface 1110 is further configured to input response information of the i^{th} codeword. The response information indicates that the i^{th} codeword is successfully decoded or fails to be decoded.

The communication apparatus 1100 provided in this embodiment may be used in the network device to complete the method performed by the network device. Therefore, for technical effect that can be achieved by the communication apparatus, refer to the foregoing method embodiments. Details are not described herein again.

Based on the foregoing embodiments, an embodiment of this application further provides a communication system. The communication system includes at least one communication apparatus used in a terminal device and at least one communication apparatus used in a network device. For technical effect that can be achieved, refer to the foregoing method embodiments. Details are not described herein again.

Based on the foregoing embodiments, an embodiment of this application further provides a system. The communication system includes at least one network device and a terminal device.

Based on the foregoing embodiments, an embodiment of this application further provides a computer-readable storage medium. The computer-readable storage medium stores a computer program or instructions. When the instructions are executed, the method performed by the terminal device or the method performed by the network device in any one of the foregoing embodiments is implemented. The computer-readable storage medium may include any medium that can store program code, for example, a USB flash drive, a removable hard disk, a read-only memory, a random access memory, a magnetic disk, or an optical disc.

To implement the functions of the communication apparatuses in FIG. 8 to FIG. 11, an embodiment of this application further provides a chip, including a processor, configured to support the communication apparatus in implementing the functions of the terminal device or the network device in the foregoing method embodiments. In a possible design, the chip is connected to a memory, or the chip includes a memory. The memory is configured to store a computer program or instructions and data that are necessary for the communication apparatus.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that a computer program or instructions may be used to implement each procedure and/or each block in the flowcharts and/or the block diagrams and a combination of a procedure and/or a block in the flowcharts and/or the block diagrams. The computer program or the instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program or the instructions may alternatively be stored in a computer-readable memory that can indicate the computer or the another programmable data processing device to operate in a specific manner, so that the instructions stored in the computer-readable memory generate an artifact that includes an instruction apparatus. The instruction apparatus implements a specified function in one or more procedures in the flowcharts and/or in one or more blocks in the block diagrams.

The computer program or the instructions may alternatively be loaded onto the computer or the another programmable data processing device, so that a series of operation steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to embodiments of this application without departing from the scope of embodiments of this application. This application is intended to cover these modifications and variations provided that they fall within the scope of protection defined by the following claims and their equivalent technologies.

## Claims

1. A secure communication method, comprising:
receiving an i^{th} codeword, wherein the i^{th} codeword is obtained by encoding an i^{th} first data packet, the i^{th} first data packet is obtained by encrypting an i^{th} second data packet based on an i^{th} random seed; and if i is an integer greater than or equal to 2, the i^{th} random seed is generated based on an (i-1)^{th} random seed and an (i-1)^{th} second data packet or the i^{th} random seed is generated based on an (i-1)^{th} random seed and an (i-1)^{th} first data packet, or if i is equal to 1, the i^{th} random seed is generated based on a random vector; and
sending response information of the i^{th} codeword based on a decoding result of the i^{th} codeword, wherein the response information indicates that the i^{th} codeword is successfully decoded or fails to be decoded.

2. The method according to claim 1, further comprising:
determining the i^{th} second data packet and an (i+1)^{th} random seed based on the (i-1)^{th} random seed, the (i-1)^{th} first data packet, and the i^{th} first data packet; or determining the i^{th} second data packet and an (i+1)^{th} random seed based on the (i-1)^{th} random seed, the (i-1)^{th} second data packet, and the i^{th} first data packet, wherein
the response information indicates that the i^{th} codeword is successfully decoded.

3. The method according to claim 1 or 2, further comprising:
setting the i^{th} second data packet to a first fixed sequence, wherein the response information indicates that the i^{th} codeword fails to be decoded; and
receiving an (i+1)^{th} codeword, wherein the (i+1)^{th} codeword is obtained by encoding an (i+1)^{th} first data packet, the (i+1)^{th} first data packet is obtained by encrypting an (i+1)^{th} second data packet based on the (i+1)^{th} random seed, and the (i+1)^{th} random seed is generated based on the first fixed sequence.

4. The method according to claim 1 or 2, further comprising:
setting the (i+1)^{th} random seed to a second fixed sequence, wherein the response information indicates that the i^{th} codeword fails to be decoded; and
receiving an (i+1)^{th} codeword, wherein the (i+1)^{th} codeword is obtained by encoding an (i+1)^{th} first data packet, and the (i+1)^{th} first data packet is obtained by encrypting an (i+1)^{th} second data packet based on the (i+1)^{th} random seed.

5. The method according to claim 3 or 4, wherein before the setting the i^{th} second data packet to the first fixed sequence or the setting the (i+1)^{th} random seed to the second fixed sequence, the i^{th} codeword satisfies the following condition:
the i^{th} codeword fails to be decoded and a quantity of retransmissions of the i^{th} codeword reaches a preset threshold.

6. The method according to claim 3, wherein the first fixed sequence is agreed on in advance.

7. The method according to claim 4, wherein the second fixed sequence is agreed on in advance.

8. The method according to any one of claims 1 to 5, further comprising:
receiving a 1^{st} codeword, wherein the 1^{st} codeword is obtained by encoding a 1^{st} random seed; and
decoding the 1^{st} codeword to obtain the 1^{st} random seed.

9. A secure communication method, comprising:
encrypting an i^{th} second data packet based on an i^{th} random seed to obtain an i^{th} first data packet, wherein if i is an integer greater than or equal to 2, the i^{th} random seed is generated based on an (i-1)^{th} random seed and an (i-1)^{th} first data packet, or if i is equal to 1, the i^{th} random seed is generated based on a random vector;
encoding the i^{th} first data packet to obtain an i^{th} codeword;
sending the i^{th} codeword; and
receiving response information of the i^{th} codeword, wherein the response information indicates that the i^{th} codeword is successfully decoded or fails to be decoded.

10. The method according to claim 9, further comprising:
setting the i^{th} second data packet to a first fixed sequence, wherein the response information indicates that the i^{th} codeword fails to be decoded;
encrypting an (i+1)^{th} second data packet based on an (i+1)^{th} random seed to obtain an (i+1)^{th} first data packet, wherein the (i+1)^{th} random seed is generated based on the first fixed sequence;
encoding the (i+1)^{th} first data packet to obtain an (i+1)^{th} codeword; and
sending the (i+1)^{th} codeword.

11. The method according to claim 9, further comprising:
setting the (i+1)^{th} random seed to a second fixed sequence, wherein the response information indicates that the i^{th} codeword fails to be decoded;
encrypting an (i+1)^{th} second data packet based on the (i+1)^{th} random seed to obtain an (i+1)^{th} first data packet, wherein the (i+1)^{th} random seed is generated based on the second fixed sequence;
encoding the (i+1)^{th} data packet to obtain an (i+1)^{th} codeword; and
sending the (i+1)^{th} codeword.

12. The method according to claim 10 or 11, wherein before the setting the i^{th} second data packet to the first fixed sequence or the setting the (i+1)^{th} random seed to the second fixed sequence, the i^{th} codeword satisfies the following condition:
the i^{th} codeword fails to be decoded and a quantity of retransmissions of the i^{th} codeword reaches a preset threshold.

13. The method according to claim 10, wherein the first fixed sequence is agreed on in advance.

14. The method according to claim 11, wherein the second fixed sequence is agreed on in advance.

15. The method according to any one of claims 9 to 11, further comprising:
encoding a 1^{st} random seed to obtain a 1^{st} codeword; and
sending the 1^{st} codeword.

16. A communication apparatus, comprising a unit configured to perform the method according to any one of claims 1 to 8.

17. A communication apparatus, comprising a unit configured to perform the method according to any one of claims 9 to 15.

18. A computer-readable storage medium, wherein the computer-readable storage medium stores computer-executable instructions, and when the computer-executable instructions are invoked by an electronic apparatus, the electronic apparatus is caused to perform the method according to any one of claims 1 to 8, or the electronic apparatus is caused to perform the method according to any one of claims 9 to 15.

19. A communication system, comprising an apparatus configured to perform the method according to any one of claims 1 to 8 and an apparatus configured to perform the method according to any one of claims 9 to 15.

20. A chip system, wherein the chip system comprises:
a communication interface; and
a processor, configured to invoke and run the instructions through the communication interface, so that a device installed with the chip system performs the method according to any one of claims 1 to 8, or a device installed with the chip system performs the method according to any one of claims 9 to 15.
